# EUROPEAN PATENT APPLICATION

(11) **EP 2 540 436 A2**
(43) Date of publication of application: **02.01.2013**
(21) Application number: 12162580.0
(22) Date of filing: 30.03.2012
(51) Int. Cl.: B23K 35/00

(54) **Diffusion bonding of glassy aluminum-based alloys**

(30) Priority: 27.06.2011 US 201113169194
(71) Applicant: United Technologies Corporation, Hartford, CT 06101 (US)
(72) Inventor: Watson, Thomas J., South Windsor, CT 06074 (US); Seetharaman, Venkatarama K., Rocky Hill, CT 06067 (US)
(74) Representative: Hall, Matthew Benjamin

(57) **Abstract**

A method of bonding devitrified glass-forming aluminum alloys surfaces to each other, comprising the steps of cleaning (13) the surfaces to remove surface alumina; depositing a metal (23) selected from silver and zinc on the surfaces; placing the surfaces in contact with each other; and diffusion bonding (25) the surfaces.

## Description

### BACKGROUND

Aluminum alloys are important in many industries. Glassy Al-based alloys and their devitrified derivatives are currently being considered for applications in the aerospace industry. These alloys involve the addition of rare earth and transition metal elements. These alloys have high strength and, when processed appropriately, have high ductility.

While significant weight savings can be achieved due to the lower density of Al-based alloys, as compared to well-established alloys such as titanium alloys, even greater weight savings are achievable provided this class of Al-based alloys can be efficiently joined. Examples of such alloys are disclosed in co-owned U.S. Patents No, 6,974,510 and 7,413,621.

Al-based alloys such as Al-Y-Ni-Co alloys are devitrified glass-forming aluminum alloys that derive their strength from a nanometer-sized grain structure and nanometer-sized intermetallic phase or phases. Fusion welding these alloys has not been successful because the refined microstructures are destroyed in the melt pool.

Diffusion bonding, or holding the alloys together under pressure and under an inactive atmosphere, is also not a suitable method for bonding these alloys because the nascent oxide present on the surface of aluminum and its alloys does not permit the transfer of atoms across the interface to form a suitable bond or weld.

### SUMMARY

The present invention relates to diffusion bonding of devitrified and glassy aluminum alloys. The process involves removing the alumina surface coating that aluminum alloys have, followed by coating the surface with zinc, and diffusion bonding to permit aluminum atoms to pass from one surface to the other to form a solid bond. This method works particularly well with glassy aluminum alloys and with devitrified glass-forming aluminum alloys, such that the microstructure remains in place.

The present invention is particularly suited for gas turbine aluminum alloy parts, such as rotors, stators and airfoils.

The present invention provides a method of bonding aluminum and aluminum alloy surfaces to each other, comprising the steps of: cleaning the surfaces to remove surface alumina; depositing a metal on the surfaces; placing the surfaces in contact with each other; and diffusion bonding the surfaces.

### BRIEF DESCRIPTION OF THE DRAWINGS

Certain preferred embodiments will now be described by way of example only and with reference to the accompanying drawings.

FIG. 1 is an aluminum-zinc phase diagram.

FIG. 2 is an aluminum-silver phase diagram.

FIG. 3 is a flow diagram of the process of this invention.

FIG. 4 is an optical micrograph of a silver coated surface.

FIG. 5 is an optical micrograph of a zinc coated surface.

FIG. 6 is a backscattered electron image (BEI) and a zinc X-ray map of a zinc coated surface.

### DETAILED DESCRIPTION

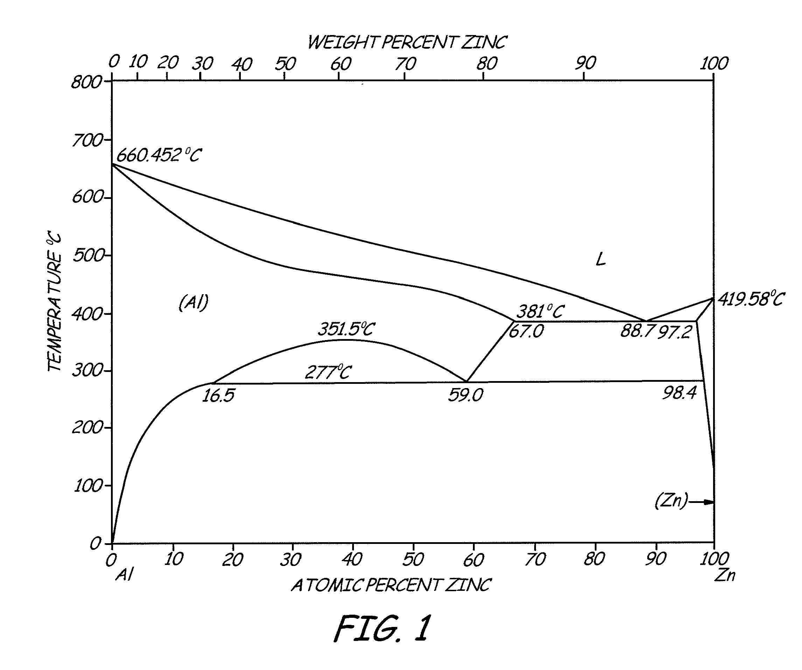

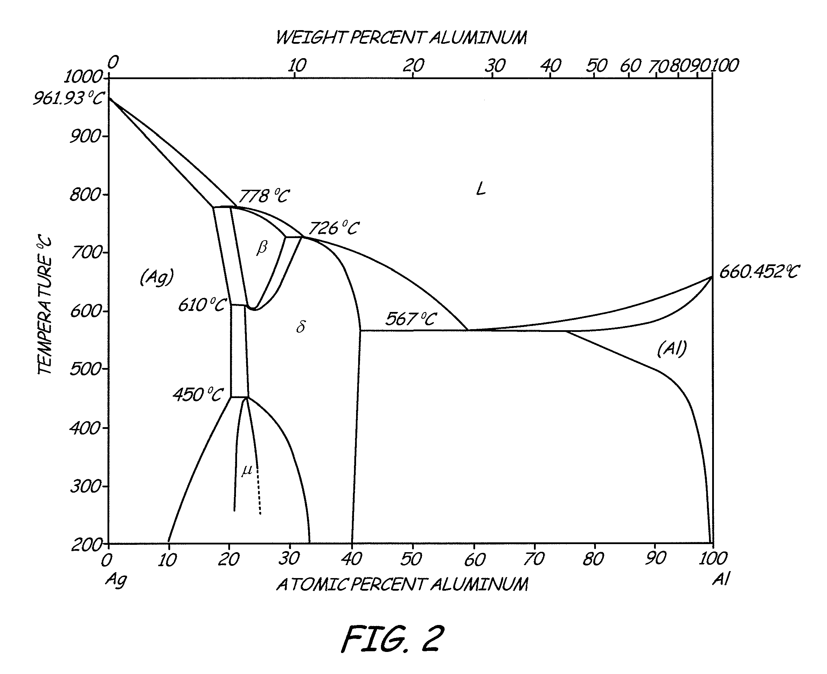

As can be seen in the phase diagram in FIG. 1, there is a large range of solid solubility of Zn in Al. Inspection of FIG. 1 shows that the solubility of Zn in Al is approximately 13 atomic percent at 260°C ( 500 °F) and over 60 atomic percent at 375 °C (700 °F). Therefore, Zn is both soluble and mobile, particularly at lower temperatures that need to be used with aluminum alloys that are glassy or devitrified aluminum-based alloys such as those discussed above in the cited patents. For comparison purposes, as can be seen in the phase diagram in FIG. 2, it can be seen that the solubility of Ag is about 3 atomic percent at 375 °C (700 °F). Thus zinc has been found to be sufficiently soluble to perform the function of protecting the surfaces of aluminum alloy objects that are to be diffusion welded.

When conventional efforts are made to diffusion bond two aluminum alloy objects, the presence of alumina or aluminum oxide prevents the transfer of aluminum atoms between the surfaces during diffusion bonding operations, especially when it is most desirable to limit microstructural coarsening that adversely affects the alloy strength.

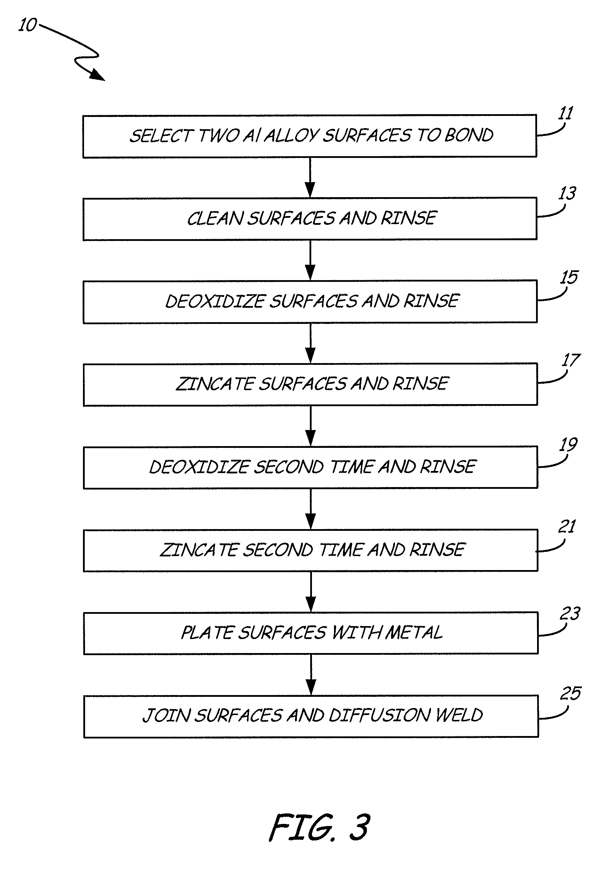

FIG. 3 illustrates the process, 10 generally, of this invention in which the adverse effects of alumina on the alloy surfaces is eliminated and aluminum atoms are free to bond without adversely affecting the microstructure of the parts being diffusion bonded. Two aluminum alloy pieces are selected, Step 11, that are to be diffusion bonded together.

The surfaces of both pieces are cleaned and rinsed, Step 13. In one example, a non-silicated alkali solution was used at 140 °F (60 °C) for five minutes, followed by rinsing. The surface is then de-oxidized in Step 15. A 50% nitric acid solution was used at room temperature for three minutes. Substantially all the alumina on the surfaces is removed, followed again by rinsing.

The surfaces of both pieces are now subjected to a metallization in Step 17. Examples of such metallization are 25% E-Prep 280 NCZ or Bondal for about one minute at room temperature. Again, the surfaces are rinsed.

A second cleaning, Step 19, with an acid such as 50% nitric acid solution at room temperature for 15 seconds, followed by a rinse, is done. Step 21 comprises a second zincate immersion using the same solution as in Step 17.

The surfaces are once again rinsed and are then plated in Step 23 with zinc. Zinc plate is applied with a zinc sulfate at 25 amps per square foot for 18 minutes.

The surfaces are now ready to be joined and are pressed against each other and diffusion bonded in Step 25. It is quite important that all bonding be done in vacuum, with pressure as low as possible, i.e., in the 10⁻³ to 10⁻⁶ Torr range, preferably less than 10⁻⁶ Torr. For glassy materials, the temperature and the allowable time for diffusion bonding can be obtained from a Time-Temperature-Transformation (TTT) curve for devitrification of the glass, with data for the curve obtained via isothermal DSC. At times less than the time on the TTT curve for a given temperature, the alloy will remain glassy; whereas, at times greater than the time on the curve, the glass will devitrify. The pressure needed will be predicated on the allowable temperature and time and have been found to vary from as low as 10% of the yield strength of the glass to as high as 90% of the yield strength. For devitrified alloys with a nanoscale microstructure, it is found that temperatures up to 260 °C ( 500 °F) are sufficient with acceptable bonding obtained in from 1 to 24 hours, depending on the applied pressure. As was the case for the glasses, the applied pressure can vary from as low as 10% of the yield strength of the glass to as high as 90% of the yield strength.

Coating evaluations were performed on specimens prepared with two different cleaning practices, using cleaning the surfaces as in Step 13 and the zincate treatment of Step 17, using two different plate coatings with heat treatment in air versus vacuum, and at two different temperatures, namely 260 °C ( 500 °F) and 375 °C (700 °F). All specimens were generated on 0.125 inch by 2 inch (0.3 to 5 cm) commercially pure aluminum. Optical microscopy was used to evaluate four specimens: two with zinc exposed to 260 °C ( 500 °F) and 375 °C (700 °F), recognizing that pure zinc melts at 381 °C; and two with silver exposed to 260 °C ( 500 °F) and 375 °C (700 °F). The zinc coatings appeared to be discontinuous and fragmented while the silver coating appears relatively continuous and smooth. The zinc coating has moved from the surface.

A zinc coating that was heat treated at 260 °C ( 500 °F) for ten hours in vacuum showed that the zinc diffuses via volume diffusion and grain boundary diffusion such that the zone is about 25 microns deep. The nanoscale microstructure of the devitrified alloys being bonded allows the inter-diffusion zone to be substantially thicker than the 25 microns from commercial purity aluminum that has a large grain size of about 20 microns.

Another zinc coating was treated at 375 °C (700 °F) for ten hours showed that the zinc mobility is controlled by volume diffusion, leading to a uniformity of zinc composition in the transverse direction. Zinc clearly is effective in preparing the surfaces for diffusion bonding. Similar efforts using silver were not successful.

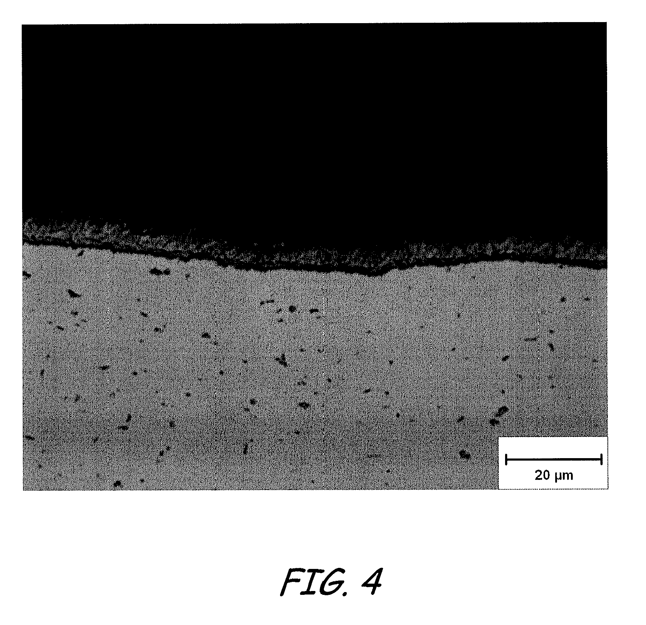

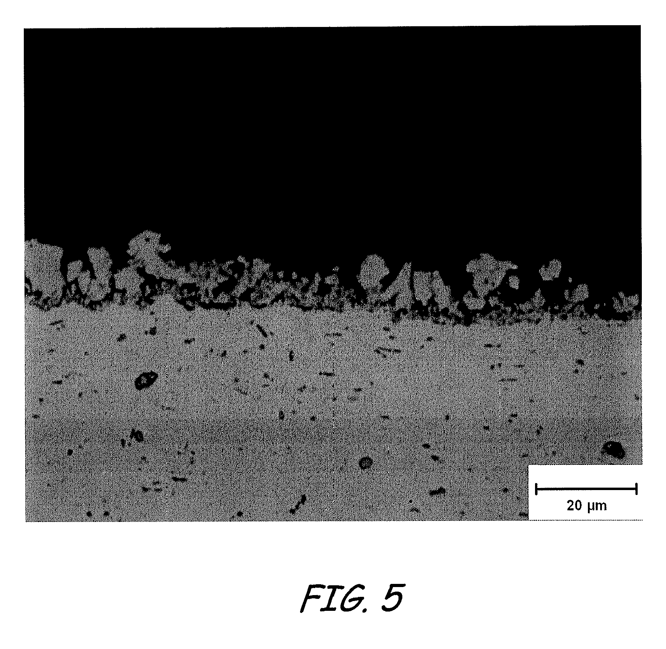

The zinc and silver treated alloys were evaluated by optical microscopy at 500X and the electron microprobe. FIG. 4 is an optical micrograph of the silver specimen and FIG. 5 is an optical micrograph of the zinc specimen. The zinc coating in FIG. 5 appears to be discontinuous and fragmented, though it starts out smooth and continuous. This shows that matter has moved away from the interface. The silver coating in FIG. 4 appears to be relatively continuous and smooth, suggesting that, relatively speaking, diffusion is quite limited.

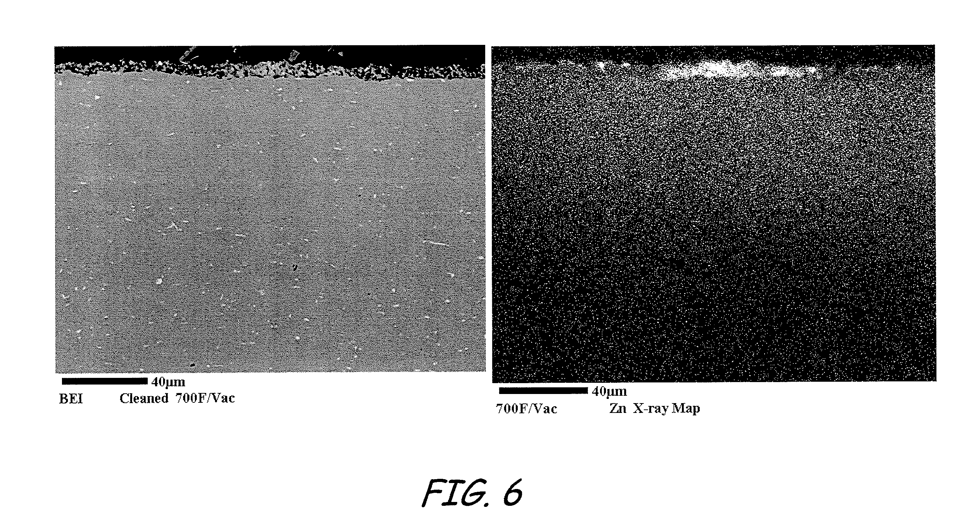

FIG. 6 shows the results obtained from a zinc coated specimen heat treated at 375 °C (700 °F) for ten hours, both as a backscattered electron image (BEI) and an X-ray map. These micrographs demonstrate that the mobility of zinc is controlled by volume diffusion, leading to a uniformity of zinc composition in the transverse direction. The size of the inter-diffusion zone for the heat treatment at 700 °F is substantially larger than that corresponding to heat treatment at 500 °F.

For heat treatment at these two temperatures with silver, no appreciable amount of diffusion was found. This is due to the substantially superior solid solubility of zinc compared to silver. Tests have shown that diffusion bonding with zinc coated surfaces as described above have a substantial strength at the bond between the surfaces.

While the invention has been described with reference to an exemplary embodiment(s), it will be understood by those skilled in the art that various changes may be made and equivalents may be substituted for elements thereof without departing from the scope of the invention defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

The following clauses set out features of the invention which may not presently be claimed in this application but which may form the basis for future amendment or a divisional application.
1. A method of bonding aluminum and aluminum alloy surfaces to each other, comprising the steps of:
   cleaning the surfaces with an acid solution to remove surface alumina;
   metalizing the cleaned surface;
   cleaning the surfaces with an acid solution a second time to remove surface alumina;
   metalizing the cleaned surface after the second cleaning;
   depositing a metal on the surfaces;
   placing the surfaces in contact with each other; and
   diffusion bonding the surfaces.
2. The method of clause 1, wherein the acid is a 50% solution of nitric acid.
3. The method of clause 1, wherein the metal is zinc.
4. The method of clause 3, wherein the zinc deposited is from zinc sulfate deposited at a current density of 25 amps per square foot for about 18 minutes.
5. The method of clause 1, wherein the diffusion bonding is carried out at a temperature up to 260 °C at a pressure ranging from 10% to 90% of the yield strength of the surface in a vacuum of 10⁻³ to 10⁻⁶ Torr for from about 1 hour to 24 hours.
6. The method of clause 1, wherein the aluminum surfaces are selected from gas turbine parts.
7. The method of clause 6, wherein the gas turbine parts are selected from rotors, stators and airfoils.
8. The method of clause 1, wherein the aluminum surfaces are devitrified glass-forming aluminum alloys.
9. A method of bonding devitrified glass-forming aluminum alloy surfaces to each other, comprising the steps of:
   cleaning the surfaces with a nitric acid solution to remove surface alumina;
   metallizing the cleaned surface;
   cleaning the surfaces with a nitric acid solution a second time to remove surface alumina;
   metallizing the cleaned surface after the second cleaning;
   depositing zinc on the surfaces, the zinc deposited is from zinc sulfate deposited at a current density of 25 amps per square foot for about 18 minutes;
   placing the surfaces in contact with each other; and
   diffusion bonding is carried out at a temperature up to 260 °C at a pressure ranging from 10% to 90% of the yield strength of the surface in a vacuum of 10⁻³ to 10⁻⁶ Torr for from about 1 hour to 24 hours.

## Claims

1. A method of bonding aluminum and aluminum alloy surfaces to each other, comprising the steps of:
cleaning (13) the surfaces to remove surface alumina;
depositing (23) a metal on the surfaces;
placing the surfaces in contact with each other; and
diffusion bonding (25) the surfaces.

2. The method of claim 1, wherein the metal is zinc.

3. The method of claim 2, wherein the zinc deposited is from zinc sulfate deposited at a current density of 25 amps per square foot for about 18 minutes.

4. The method of claim 1, 2 or 3, which further includes a metallization step (17) after the cleaning step.

5. The method of claim 4, which further includes a second cleaning step (19) followed by a second metallization step (21) after the metallization step.

6. The method of any preceding claim, wherein the surfaces are cleaned (13) using an acid solution.

7. The method of claim 6, wherein the acid is a 50% solution of nitric acid.

8. The method of any preceding claim, wherein the diffusion bonding is carried out at a temperature up to 260 °C at a pressure ranging from 10% to 90% of the yield strength of the surface in a vacuum of 10⁻³ to 10⁻⁶ Torr for from about 1 hour to 24 hours.

9. The method of any preceding claim, wherein the aluminum surfaces are selected from gas turbine parts.

10. The method of claim 9, wherein the gas turbine parts are selected from rotors, stators and airfoils.

11. The method of any preceding claim, wherein the aluminum surfaces are devitrified glass-forming aluminum alloys.
